# EUROPÄISCHE PATENTSCHRIFT

(11) **EP 3 826 822 B1**
(45) Veröffentlichungstag und Bekanntmachung des Hinweises auf die Patenterteilung: **02.08.2023**
(21) Anmeldenummer: 19729248.5
(22) Anmeldetag: 05.06.2019
(51) Int. Cl.: B29C 49/42, B29B 11/14, B29C 49/48, B29C 49/54, B29C 49/76

(54) **STRECKBLASVERFAHREN ZUR HERSTELLUNG EINES KUNSTSTOFFBEHÄLTERS UND IN EINEM STRECKBLASVERFAHREN HERGESTELLTER KUNSTSTOFFBEHÄLTER**
STRETCH-BLOW-MOULDING METHOD FOR PRODUCING A PLASTIC CONTAINER AND PLASTIC CONTAINER PRODUCED IN A STRETCH-BLOW -MOULDING METHOD
PROCÉDÉ D'ÉTIRAGE-SOUFFLAGE POUR LA FABRICATION D'UN RÉCIPIENT EN MATÉRIAU SYNTHÉTIQUE ET RÉCIPIENT EN MATÉRIAU SYNTHÉTIQUE FABRIQUÉ DANS UN PROCÉDÉ D'ÉTIRAGE-SOUFFLAGE

(30) Priorität: 25.07.2018 CH 9212018
(43) Veröffentlichungstag der Anmeldung: 02.06.2021
(73) Patentinhaber: ALPLA Werke Alwin Lehner GmbH & Co. KG, 6971 Hard (AT)
(72) Erfinder: DEMIR, Adem, 6923 Lauterach (AT)
(74) Vertreter: Bohest AG Branch Ostschweiz
(86) Internationale Anmeldenummer: PCT/EP2019/064586
(87) Internationale Veröffentlichungsnummer: WO 2020/020522

(56) Entgegenhaltungen:
- WO-A1-98/45106
- WO-A1-2006/034231
- WO-A2-2007/089566
- US-A- 4 894 268
- US-A1- 2011 070 388

## Beschreibung

Die Erfindung betrifft ein Streckblasverfahren zur Herstellung eines Kunststoffbehälters gemäss dem Oberbegriff des Patentanspruchs 1. Die Erfindung betrifft auch einen in einem Streckblasverfahren hergestellten Kunststoffbehälter.

Ein grosse Zahl der heutzutage eingesetzten Kunststoffbehälter, insbesondere Kunststoffflaschen und dergleichen, wird in einem Streckblasverfahren hergestellt. Beim Streckblasverfahren wird ein sogenannter Preform, der üblicherweise eine röhrchenartige Gestalt besitzt, an seinem einen Längsende einen Boden und am anderen Längsende einen Halsbereich mit ausgeformten Gewindeabschnitten oder dergleichen aufweist, in eine Formkavität einer Blasform eingesetzt und durch ein mit Überdruck eingeblasenes Medium aufgeblasen. Dabei wird der Preform zusätzlich mit einem durch die Halsöffnung eingefahrenen Reckdorn in axiale Richtung gereckt. Nach diesem Blas- und Reckvorgang wird der fertige, streckverfestigte Kunststoffbehälter aus der Blasform entformt.

Der am häufigsten für die Herstellung von Kunststoffbehältern im Streckblasverfahren eingesetzte Rohstoff ist Polyethylenterephthalat (PET). PET weist infolge der im Streckblasverfahren durchgeführten hohen Verstreckung sehr gute mechanische Festigkeitswerte und Barriereeigenschaften sowie eine hohe thermische Beständigkeit auf. Beispielsweise wird im Streckblasverfahren von PET ein Gesamtverstreckungsfaktor von bis zu 20 erreicht. Wegen des hohen Verstreckungsgrades sind streckgeblasene Kunststoffbehälter extrusionsgeblasenen Kunststoffbehälter in vielen Eigenschaften, wie beispielsweise mechanische Festigkeit, thermische Beständigkeit, Barriereeigenschaften, überlegen. Dadurch können sie oft mit geringeren Wandstärken hergestellt werden als extrusionsgeblasene Kunststoffbehälter, ohne dabei ihre überlegenen Eigenschaften einzubüssen.

Beim Streckblasverfahren wird der Halsbereich des Preforms in der Regel nicht verändert und besteht aus einem amorphen Kunststoff, insbesondere PET. Der Halsbereich aus unverstrecktem PET kann mit den guten Eigenschaften der übrigen verstreckten Bereiche der Kunststoffflasche nicht mithalten. Um die schlechteren mechanischen und thermischen Eigenschaften sowie die reduzierten Barriereeigenschaften wenigstens zum Teil zu kompensieren, weist bei vielen streckgeblasenen Kunststoffbehältern der Halsbereich eine gegenüber den übrigen Bereichen des Kunststoffbehälters deutlich grössere Wandstärke auf. Dies führt jedoch zu einem erhöhten Materialverbrauch und verteuert die Herstellung von streckgeblasenen Kunststoffbehältern.

Um dem Problem der ungünstigeren Eigenschaften des unverstreckten Kunststoffmaterials im Halsbereich abzuhelfen, ist bereits vorgeschlagen worden, streckgeblasene Kunststoffbehälter in einem sogenannten Lost-Neck (verlorener Hals) Verfahren herzustellen. Bei diesem Herstellverfahren, das insbesondere auch für die Produktion von Kunststoffbehältern eingesetzt wird, die im Halsbereiche einen relativ grossen Innendurchmesser von beispielsweise 30 mm bis 150 mm aufweisen, wird aus einem herkömmlichen röhrchenartigen Preform ein Kunststoffbehälter mit einem sogenannten Dom streckgeblasen. Der Dom wird nach dem Streckblasverfahren vom jeweiligen Kunststoffbehälter abgeschnitten. Während des Streckblasverfahrens werden in einem Bereich unmittelbar unterhalb des abzutrennenden Doms auch die erforderlichen Aussenkonturen, wie beispielsweise Gewindeabschnitte, ein Supportring oder dergleichen, festgelegt.

Der Bereich, in dem die Gewindeabschnitte und/oder ein Supportring oder dergleichen angeordnet sind, wird beim Streckblasen in einem zu den übrigen Abschnitten des Behälters vergleichbaren Ausmass verstreckt. Wegen der relativ hohen Verstreckung des Kunststoffmaterials während des Blasformens kann dieser Bereich jedoch eine so hohe Festigkeit erlangen, dass "scharfkantige" Strukturen, wie beispielsweise Gewindeabschnitte, ein Supportring oder dergleichen, im Blasprozess nicht mehr vollständig ausgeblasen werden können. Als "scharfkantig" im Sinne der Erfindung werden dabei aus der Behälterwandung vorspringende oder auch rückspringende Strukturen angesehen, die einen Krümmungsradius von bis zu 1,2 mm aufweisen. Die nicht ausgeblasene, zu wenig scharfkantige Kontur der im Blasverfahren ausgeformten Strukturen, beispielsweise von Gewindeabschnitten, kann dazu führen, dass ein Schraubdeckel nicht ausreichend fest auf dem Kunststoffbehälter befestigt werden kann.

In verschiedenen Anwendungen werden Kunststoffbehälter, beispielsweise aus Sterilitätsgründen oder um die Fliesseigenschaften des Füllgutes zu verbessern, heiss oder zumindest warm abgefüllt. Unmittelbar nach dem Abfüllen werden die Behälter dicht verschlossen, und das Füllgut kühlt ab. Bei warm oder heiss abgefüllten Kunststoffbehältern kann die Dichtigkeit des Verschlusses zur Folge haben, dass sich der Behälter beim Abkühlen des Füllguts verformen kann. Die Verformung ist eine Folge der Druckdifferenz zwischen dem von aussen auf die Behälterwandungen einwirkenden Atmosphärendruck und dem infolge des Abkühlens im Inneren entstehenden Unterdruck. So kann kurz nach dem Abfüllen beispielsweise durch das Abdampfen der Flüssigkeit, durch Ausgasen des Produktes oder durch eine erhöhte Temperatur des Füllgutes im Behälterhalb bzw. Kopfraum ein Überdruck entstehen. Nach dem Abkühlen des Behälters kommt es zumeist zu einem Unterdruck, da die Gase im Kopfraum und das Füllgut selbst durch den Temperaturunterschied ihr Volumen stark verändern, insbesondere verringern. Zusätzlich kann ein Unterdruck auch noch dadurch entstehen, dass ein Teil des im Kopfraum enthaltenen Gases sich im Füllgut löst bzw. mit diesem chemisch reagiert. Auch kann es vorkommen, dass bestimmte Inhaltsstoffe den Behälter durch Migrationsvorgänge durch die Behälterwandung verlassen und einen Unterdruck zurück lassen. So kann beispielsweise der Wasserverlust bei PET Gebinden schon nach einem Jahr deutlich über einem Prozent liegen. Bei anderen Materialien, wie z.B. den neuerdings eingesetzten Biokunststoffen, kann ein Wasserverlust in der angegebenen Grössenordnung auch bereits schon nach kürzerer Zeit auftreten.

Auch die Abfüllung und der Vertrieb von Kunststoffbehältern in unterschiedlichen Höhen können zu Verformungen führen. So besteht bei Kunststoffbehältern, die beispielsweise in der Höhe von Mexiko City abgefüllt werden und dann an die Küste transportiert und angeboten werden, die Gefahr einer Verformung aufgrund des an der Küste herrschenden grösseren Luftdrucks. Insbesondere bei Kunststoffbehältern mit einer langgestreckten, im wesentlichen zylindrischen Gestalt kann es dadurch im zentralen Bereich ihrer axialen Erstreckung zu Verformungen, insbesondere Einbuchtungen kommen, die für den Konsumenten optisch sofort als Makel erkennbar sind. Zwar hat diese Verformung der Kunststoffbehälter im allgemeinen keine Auswirkungen auf die Qualität des Füllguts. Für den Konsumenten ist aber oftmals die äussere Erscheinungsform eines Verkaufsartikels entscheidend für seine Wahl. Ein Kunststoffbehälter, der Deformationen aufweist, kann daher oftmals zu der irrtümlichen Annahme des Kunden führen, dass das im Behälter enthaltene Produkt nicht mehr die gewünschten Qualitätseigenschaften aufweist.

Dieser Tendenz, sich beim Abkühlen des warm oder heiss abgefüllten Füllguts zu verformen, kann zwar durch eine grössere Wandstärke der Kunststoffbehälter entgegengewirkt werden. Durch den erhöhten Materialbedarf verteuert sich jedoch die Herstellung dieser Kunststoffbehälter und ihr Gewicht nimmt zu. Es sind auch Lösungen bekannt, bei denen entlang der axialen Erstreckung der Kunststoffbehälter Versteifungen vorgesehen sind. Die mechanischen Versteifungen bedingen speziell geformte Spritzdüsen zur Herstellung der Preforms und eine besondere Prozessführung.

Aber auch ein im Behälterinneren mit der Zeit auftretender erhöhter Innendruck kann zu Verformungen des Behälters führen. Dies kann beispielsweise bei Produkten der Fall sein, die während der Lagerung in einem gewissen Masse ausgasen können. Auch bei einer Lagerung bei höheren Temperaturen kann im Kunststoffbehälter ein erhöhter Innendruck auftreten, der zu einer Verformung des Kunststoffbehälters, beispielsweise zu einem Herausdrücken des Behälterbodens, führen kann. Gerade eine Verformung im Behälterbodenbereich kann sich als sehr nachteilig erweisen, da der Kunststoffbehälter dann oft nicht mehr standfähig ist.

Die im Behälterinneren auftretenden Unter- und Überdrücke können auch durch einen Phasenwechsel oder durch chemische Reaktionen entstehen. Beispielsweise kann Vitamin C mit Sauerstoff im Kopfraum des Behälters reagieren. Auch unterschiedliche Löslichkeiten von Gasen in der abgefüllten Flüssigkeit bei unterschiedlichen Temperaturen können zu einem Ausgasen und damit beispielsweise zu einer Innendruckerhöhung führen. US 2011/070388 A1 offenbart ein Streckblasverfahren nach dem Oberbegriff des Anspruchs ein und einen entpsrechend hergestellten Kunststoffbehälter.

Aufgabe der vorliegenden Erfindung ist es daher, ein Streckblasverfahren zur Herstellung von Kunststoffbehältern dahingehend zu modifizieren, dass diesen vorstehend geschilderten, unterschiedlichen Problemen, nämlich nicht ausreichend scharfkantige Strukturen einerseits und Innendruckveränderungen im Behälterinneren, Rechnung getragen werden kann.

Die Lösung dieser teils widersprüchlichen Aufgaben besteht in einem Streckblasverfahren zur Herstellung von Kunststoffbehältern, welches die im Patentanspruch 1 aufgelisteten Merkmale aufweist. Weiters wird den geschilderten Problemen des Stands der Technik auch durch einen in einem Streckblasverfahren hergestellten Kunststoffbehälter Rechnung getragen, der die im unabhängigen Vorrichtungsanspruch aufgelisteten Merkmale aufweist. Weiterbildungen und/oder vorteilhafte und bevorzugte Ausführungsvarianten der Erfindung sind Gegenstand der jeweiligen abhängigen Verfahrens- oder Vorrichtungsansprüche.

Durch die Erfindung wird ein Streckblasverfahren zur Herstellung eines Kunststoffbehälters vorgeschlagen, bei dem ein im wesentlichen röhrchenartig ausgebildeter Preform mit einem Halsteil in eine Formkavität eines Blasformwerkzeugs einer Streckblasmaschine eingesetzt und mit Hilfe eines Fluids durch Überdruck gemäss der Formkavität aufgeblasen, mit einem Reckdorn gereckt, ein geblasener Dom, der an einen mit wenigstens einer gegenüber einer Behälterwandung vor- oder rückspringenden Struktur versehenen Behälterabschnitt anschliesst und den Halsteil des Preforms umfasst, abgetrennt und der streckgeblasene Kunststoffbehälter entformt wird. Das Fluid kann flüssig oder gasförmig sein; üblicherweise wird Luft als Blasmedium eingesetzt. Das Streckblasverfahren zeichnet sich dadurch aus, dass wenigstens der an den Dom anschliessende Behälterabschnitt, der die wenigstens eine Struktur aufweist, innerhalb der Formkavität in einem vorgebbaren Ausmass axial gestaucht wird, bevor der Kunststoffbehälter entformt wird.

Der aus einem Preform streckgeblasene Kunststoffbehälter wird nach dem Prinzip des Lost-Neck (verlorener Hals) Verfahrens hergestellt. Dabei wird auch der Behälterabschnitt, der die wenigstens eine gegenüber einer Behälterwandung vor- oder rückspringenden Struktur aufweist, in ausreichendem Masse streckverfestigt. Noch vor der Entformung des streckgeblasenen Kunststoffbehälters aus der Formkavität wird der an den Dom anschliessende Behälterabschnitt, der die wenigstens eine Struktur aufweist in einem vorgebbaren Ausmass gestaucht. Die wenigstens eine Struktur im an den Dom anschliessenden Behälterabschnitt wird zunächst mit einer Kontur hergestellt, die einen relativ grossen Krümmungsradius aufweist. Das Kunststoffmaterial kann beim Streckblasen sehr gut in eine dafür vorgesehene Vertiefung der Formkavität hinein bzw. über einen entsprechend an der Formkavität ausgebildeten Vorsprung drüber geblasen werden. Die in der Aussenwandung des Behälterabschnitts ausgebildete wenigstens eine Vertiefung bzw. der wenigstens eine Vorsprung mit relativ grossen Krümmungsradien werden beim axialen Stauchen des Behälterabschnitts verformt und erhalten dadurch eine scharfkantige Kontur. Eine scharfkantige Kontur im Sinne der Erfindung weist dabei einen Krümmungsradius von bis 1,2 mm, vorzugsweise bis zu 0,5 mm, auf. Das erfindungsgemässe Streckblasverfahren erlaubt somit die Herstellung von Strukturen, wie z.B. Gewindeabschnitten, Supportringen, Dehn- oder Stauchfugen, etc., die auch bei in höherem Ausmass streckverfestigten Behälterabschnitten eine relativ scharfkantige Kontur aufweisen können. Derartige scharfkantige Strukturen, die sonst nur in einem Spritzgiessverfahren oder in einem Fliesspressverfahren herstellbar sind, können dadurch in einem Blasverfahren erzeugt werden. Ein derart streckgeblasener Kunststoffbehälter weist den Vorteil auf, dass er auch in den mit Strukturen, wie z.B. Gewindeabschnitten, Supportring und dergleichen, versehenen Behälterabschnitten in hohem Masse streckverfestigt ausgebildet ist. Dadurch kann Kunststoffmaterial, welches sonst für eine wenigstens teilweise Kompensation der nicht ausreichend grossen mechanischen und thermischen Festigkeiten von herkömmlich hergestellten Kunststoffbehältern eingesetzt wird, eingespart werden. Der Behälterabschnitt mit der wenigstens einen geblasenen und gestauchten Struktur weist infolge der Streckverfestigung praktisch die gleichen Barriereeigenschaften auf, wie die übrigen Bereiche des Kunststoffbehälters.

Bei geeigneter Ausbildung des Blasformwerkzeugs können bei Bedarf auch weitere Abschnitte des Kunststoffbehälters axial gestaucht werden, um dort ausgebildete Strukturen, die gegenüber einer Behälterwandung vor- bzw. zurückspringen, hinsichtlich der Krümmungsradien zu verändern, insbesondere um diese wenigstens temporär zu verkleinern bzw. scharfkantiger auszuformen.

In einer Variante des Streckblasverfahrens kann eine axiale Länge des die wenigstens eine Struktur aufweisenden Behälterabschnitts des Kunststoffbehälters beim axialen Stauchen wenigstens temporär um 1 mm bis 30 mm reduziert wird. Die wenigstens temporäre Reduktion des Kunstoffbehälters kann dabei an mehreren Stellen oder aber auch an einer Stauchstelle erfolgen. Der axial gestauchte Behälterabschnitt kann permanent axial verkürzt werden. In einer alternativen Verfahrensvariante kann die axiale Stauchung des Behälterabschnitts sich auch wenigsten teilweise wieder zurückbilden. Die Zurückbildung der axialen Stauchung bzw. die Wiedereinnahme der ursprünglichen axialen Länge des Behälterabschnitts kann gezielt erfolgen, beispielsweise um Volumensänderungen des Füllguts zu kompensieren.

In einer weiteren Variante des Streckblasverfahrens kann ein Bereich des Behälterabschnitts des Kunststoffbehälters, der wenigstens eine Struktur, vorzugsweise in Form von Gewindeabschnitten, aufweist, für den Stauchprozess auf eine Temperatur erwärmt werden, die grösser ist als eine Schmelztemperatur des Kunststoffs aus dem der Preform hergestellt ist. Wird der Bereich des Behälterabschnitts auf eine Temperatur über der Schmelztemperatur erwärmt, kommt es beim axialen Stauchen des Behälterabschnitts zu einer stoffschlüssigen Verbindung bzw. zu einem Verschweissen der zusammengepressten Wandungsabschnitte. Mit dieser Verfahrensführung können beispielsweise relativ scharfkantige und formstabile Gewindeabschnitte hergestellt werden, die Krümmungsradien aufweisen, die sonst nur in einem Spritzgiessverfahren oder in einem Fliesspressverfahren herstellbar sind. Neben Gewindeabschnitten kann der Behälterabschnitt beispielsweise auch noch einen Supportring oder dergleichen aufweisen. Durch Erwärmung auf eine Temperatur grösser als die Schmelztemperatur des Kunststoffs kann der Krümmungsradius des freien Endes des Supportrings reduziert und seine Formstabilität erhöht werden, weil beim axialen Stauchen die zusammengepressten Wandungsteile stoffschlüssig miteinander verbunden bzw. verschweisst werden. Die Struktur mit stoffschlüssig miteinander verbundenen bzw. verschweissten Wandungen ist relativ steif und kann relativ hohe axiale und radiale Zug- und Druckkräfte aufnehmen. Beispielsweise können beim Stapeln der Behälter relativ hohe Druckkräfte auftreten. Bei kohlensäurehaltigen Getränken können innerhalb des Behälters relativ hohe axiale Zugkräfte in Verbindung mit radialen Druckkräften auftreten.

In einer Variante des Streckblasverfahrens gemäss der Erfindung kann ein Bereich des Behälterabschnitts des Kunststoffbehälters, der wenigstens eine, vorzugsweise wenigstens bereichsweise ringförmig umlaufende, Struktur aufweist, für den Stauchprozess auf eine Temperatur erwärmt werden, die grösser ist als eine Geliertemperatur und kleiner ist als eine Schmelztemperatur des Kunststoffs aus dem der Preform hergestellt ist. Bei Temperaturen zwischen der Geliertemperatur und der Schmelztemperatur des Kunststoffmaterials kommt es durch das axiale Stauchen zu einem Verkleben der zusammengepressten Wandungsteile. Diese Verklebung ist durch eine Mindestzugkraft in der Grössenordnung von ca. 2 N pro mm verklebter Länge wieder lösbar. Eine derart hergestellte Struktur ist scharfkantig, d.h. sie kann an ihrem freien Ende einen Krümmungsradius von bis zu 0,5 mm aufweisen. Die scharfkantige Struktur kann relativ hohe radiale Kräfte aufnehmen, wie sie beispielsweise beim Aufeinanderprallen der Kunststoffbehälter auf einer Abfüllanlage auftreten können. Auch weist der Kunststoffbehälter eine relativ grosse Griffsteifigkeit gegenüber radialen Kräften, die der Konsument beim Handhaben des Kunststoffbehälters ausüben kann, auf. Die Struktur mit verklebten Wandungsteilen ist jedoch nur bedingt formstabil, weil die Verklebung unter Zug wieder gelöst werden kann. Dadurch verändert sich der Krümmungsradius der Struktur, was von aussen unmittelbar ersichtlich ist. Dies kann beispielsweise dazu genützt werden, den Verderb eines abgefüllten Produkts anzuzeigen. Beispielsweise kann sich innerhalb des Behälters durch Gärprozesse ein Überdruck aufbauen, der zu einem Lösen der verklebten Wandungsteile der Struktur führen kann. Es kann auch eine Struktur vorgesehen sein, die als eine Erstöffnungsanzeige dienen kann, bei der die miteinander verklebten Wandungsteile durch eine Kraftaufbringung beim Öffnen des Behälterverschlusses voneinander gelöst werden. Die gelöste Verklebung der Struktur kann dann eine Scharnierfunktion erfüllen und erlaubt es dem Behälter, sich an Volumensänderungen des Füllguts, beispielsweise durch Temperaturunterschiede, anzupassen.

Eine weitere Ausführungsvariante des erfindungsgemässen Streckblasverfahrens kann vorsehen, dass ein Bereich des Behälterabschnitts des Preforms, der wenigstens eine, vorzugsweise wenigstens bereichsweise ringförmig umlaufende, Struktur aufweist, für den Stauchprozess auf eine Temperatur erwärmt wird, die kleiner ist als eine Geliertemperatur des Kunststoffs aus dem der Preform hergestellt ist. Beim axialen Stauchen kann es zu einer sehr leicht lösbaren Verbindung der zusammengepressten Wandungsteile kommen. Die Verbindung ist so lose, das sie bereits durch einen sehr geringen Kraftaufwand von beispielsweise nur gerade 0,9 N pro mm zusammengepresster Länge lösbar ist. Die gestauchte Struktur erfüllt eine Scharnierfunktion und erlaubt es dem Behälterabschnitt, sehr leicht Volumensänderungen des Füllguts infolge von Temperaturunterschieden (Abkühlen nach Heissabfüllen oder Pasteurisieren; Lagerung des Behälters im Kühlschrank oder Tiefkühler) zu folgen.

In einer Variante des Streckblasverfahrens nach der Erfindung kann das Stauchen des Behälterabschnitts mit Hilfe eines Stauchrings erfolgt, der einen Bestandteil des Blasformwerkzeugs bildet. Der Stauchring ist beispielsweise in Analogie zur Ausbildung des Blasformwerkzeugs mit zwei Blasformhälften von zwei Halbschalen gebildet, die bei geschlossenem Blasformwerkzeug zu einem Stauchring vereinigt werden. Es versteht sich, dass das Blasformwerkzeug über seine axialer Erstreckung auch noch weitere Stauchringe aufweisen kann, die dazu dienen, auch andere Bereiche des Kunststoffbehälters zu stauchen, um dort befindliche Strukturen hinsichtlich ihrer Kontur zu beeinflussen, insbesondere deren Krümmungsradien zu verringern.

Eine andere Variante des Streckblasverfahrens kann vorsehen, dass das Stauchen des an den Dom anschliessenden Behälterabschnitts mit Hilfe einer Blasdüse erfolgt, die in eine Öffnung im Halsteil des in der Formkavität angeordneten Preforms eingefahren wird. Bei dieser Verfahrensvariante kann das Blasformwerkzeug einfacher gestaltet werden.

Bei einer weiteren Ausführungsvariante des Streckblasverfahrens kann beim Zustellen des in den Halsteil des Preforms eingefahrenen Blasdorns, um den an den Dom anschliessenden Behälterabschnitt axial zu stauchen, der Dom abgetrennt werden. Bei dieser Verfahrensvariante werden das axiale Stauchen des Behälterabschnitts und das Abtrennen des Doms zu einem einzigen Prozessschritt zusammengefasst. Dadurch kann die Zykluszeit für die Herstellung eines Kunststoffbehälters verkürzt werden.

Eine Verfahrensvariante kann vorsehen, dass die am Kunststoffbehälter infolge der Abtrennung des Doms gebildete Schnittkante sowie die sich daran anschließende Wandung thermisch und/oder mechanisch behandelt wird, um diese zu glätten.

Bei einer weiteren Verfahrensvariante kann das Abtrennen des Doms vom Kunststoffbehälter im Bereich einer vorspringenden Struktur erfolgen.

Das Abtrennen des Doms kann auch derart erfolgen, dass die vorspringende Struktur von einer oberen Wandung, welche die Schnittkante umfasst, und von einer unteren Wandung begrenzt wird. Die obere und die untere Wandung können dann miteinander verbunden werden. Dies kann vorzugsweise durch Ultraschallschweißen oder durch Laserschweißen erfolgen.

Beim Abtrennen des Doms erstreckt sich die Schneidrichtung im Wesentlichen quer zur Längsachse des Kunststoffbehälters und/oder im Wesentlichen längs zur Längsachse des Kunststoffbehälters.

Das erfindungsgemässe Streckblasverfahren kann an einem Preform durchgeführt werden, der aus einem Kunststoff gefertigt wird, der eine Kunststoff-Hauptkomponente aus der Gruppe bestehend aus Polyethylenterephthalat, Polyethylennaphthalat, Polyethylenfuranoat, Polylactid, deren Copolymere und Gemischen der genannten Kunststoffe umfasst. Die angeführten Kunststoffe weisen grosse Ähnlichkeiten hinsichtlich ihrer Verarbeitbarkeit auf. Sie erlauben hohe Verstreckungsgrade und können zu transparenten Kunststoffbehältern mit hohen Festigkeitswerten verarbeitet werden. Der Preform kann in einem Spritzgiessverfahren oder in einem Fliesspressverfahren hergestellt sein. Es kann auch ein Preform verwendet werden, die in einem Extrusionsblasverfahren hergestellt worden ist. Der Preform kann ein oder mehrschichtig aufgebaut sein. Das Streckblasverfahren kann unmittelbar im Anschluss an die Herstellung des Preforms durchgeführt werden. Die Herstellung des Preforms kann aber auch räumlich und/oder zeitlich getrennt vom Streckblasverfahren erfolgen.

Der Kunststoff-Hauptkomponente können bis zu 20 Gewichtsprozent Fremdstoffe beigemischt werden. Durch die Beimischung von Fremdstoffen können die Eigenschaften des Preforms an die gewünschten Erfordernisse angepasst werden. Beispielsweise können als Fremdstoffe Copolymere, Farbstoffe, UV-Blocker, Stabilisierungszusätze wie z.B. Glasfasern oder Glaskugeln oder Mischungen daraus, Additive oder Fremdpolymere gewählt werden. Darüber hinaus kann der Preform neben der Kunststoff-Hauptkomponente auch noch weitere Kunststoffe aus der Gruppe bestehend aus PEN, PEF, PLA, Polyester, Polyamid, Polybutylenterephthalat, Polycarbonat, Polyolefine, Silicone, deren Copolymere und Mischungen der genannten Kunststoffe umfassen.

Ein nach einer Variante des erfindungsgemässen Streckblasverfahrens gefertigter Kunststoffbehälter weist einen Behälterabschnitt mit einer Behälteröffnung und einem geschnittenen Öffnungsrand auf. Der Behälterabschnitt ist in seiner Aussenwandung mit Gewindestrukturen ausgebildet ist, die einen Krümmungsradius von bis 1,2 mm, vorzugsweise bis zu 0,5 mm, aufweisen. Der nach dem Lost-Neck (verlorener Hals) Prozess in einem Streckblasverfahren hergestellte Kunststoffbehälter weist einerseits einen geschnittenen Hals und andererseits einen Behälterabschnitt mit Gewindeabschnitten auf, die durch axiales Stauchen scharfkantig und formstabil ausgebildet sind. Der Kunststoffbehälter ist auch in dem Behälterabschnitt mit den Gewindestrukturen in einem ausreichenden Mass streckverfestigt und weist daher auch dort eine grosse mechanische und thermische Formstabilität sowie Barriereeigenschaften auf, die vergleichbar zu denjenigen in den übrigen Abschnitten des Kunststoffbehälters sind. Dadurch kann der Behälterabschnitt, in dem die Gewindestrukturen ausgebildet sind, eine deutlich geringere Wandstärke aufweisen als konventionell streckgeblasene Kunststoffbehälter. Die axial gestauchten Gewindestrukturen weisen eine hohe Formstabilität auf und erlauben dadurch ein zuverlässiges und dichtendes Aufschrauben eines Verschlusses.

Bei den Gewindestrukturen kann es sich um Gewindefurchen oder auch um Gewindeabschnitte handelt, die Aussenwandung des Behälterabschnitts überragen.

Eine Ausführungsvariante des nach einer Variante des erfindungsgemässen Streckblasverfahrens hergestellten Kunststoffbehälters kann wenigstens einen Behälterabschnitt mit wenigstens einer zumindest bereichsweise ringförmig umlaufenden Struktur aufweist, die gegenüber einer Aussenwandung des Behälterabschnitts um einen Abstand von größer als 0,5 mm vorspringt. Beispielsweise kann die vorspringende Struktur als ein Supportring ausgebildet sein, der an seinem freien Ende einen Krümmungsradius aufweist, der bis 1,2 mm, vorzugsweise bis zu 0,5 mm, beträgt.

In einer weiteren Ausführungsvariante des Kunststoffbehälters kann die die wenigstens eine vorspringende Struktur von einer oberen und einer unteren Wandung begrenzt sein, die lösbar miteinander verbunden sein können. Die Verbindung der oberen und der unteren Wandung der vorspringenden Struktur kann durch eine Zugkraft einer Grösse von wenigstens 0,9 N pro mm Länge lösbar sein.

Weitere Vorteile ergeben sich aus der nachfolgenden Beschreibung eines Ausführungsbeispiels der Erfindung unter Bezugnahme auf die schematischen Zeichnungen. Es zeigen in nicht massstabsgetreuer geschnittener Darstellung:
- Figs. 1 und Fig. 2: zwei schematische Prinzipdarstellungen zur Erläuterung der Herstellung eines streckgeblasenen Kunststoffbehälters mit geschnittenem Hals;
- Fig. 3: eine axiale geschnittene Darstellung eines in einer Formkavität befindlichen Kunststoffbehälters vor einem axialen Stauchen;
- Fig. 4: den Kunststoffbehälter aus Fig. 2 in der Formkavität nach dem axialen Stauchen;
- Figs. 5 und Fig. 6: zwei vergrösserte Darstellungen einer Struktur in einem Behälterabschnitt vor und nach dem axialen Stauchen; und
- Figs. 7 und Fig. 8: zwei vergrösserte Darstellungen einer Struktur in einem Behälterabschnitt vor dem axialen Stauchen und nach dem axialen Stauchen und Lösen einer Verklebung.

In den schematischen Darstellungen tragen gleiche Elemente jeweils gleiche Bezugszeichen.

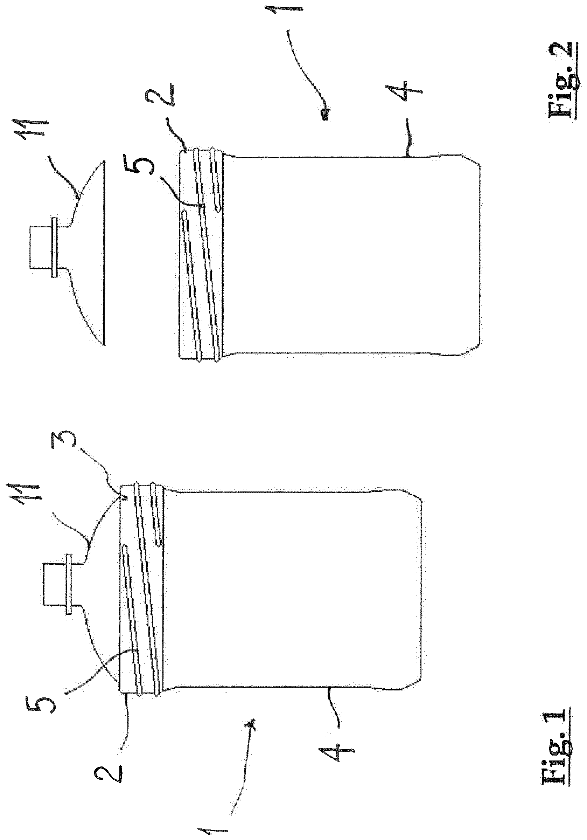

Die Prinzipdarstellung in Fig. 1 zeigt einen gesamthaft mit dem Bezugszeichen 1 bezeichneten Kunststoffbehälter, der in einem Streckblasverfahren aus einem standardmässig ausgebildeten, in einem Kunststoffspritzverfahren oder in einem Fliesspressverfahren hergestellten Preform geformt worden ist. Alternativ kann der Preform sogar in einem Extrusionsblasverfahren hergestellt sein. Derartige Preforms sind aus dem Stand der Technik hinlänglich bekannt. Sie weisen üblicherweise einen länglichen, im wesentlichen zylindrisch oder leicht konisch ausgebildeten Körper auf. An einem Längsende ist der Preformkörper verschlossen ausgebildet. An das andere Längsende des Preformkörpers schliesst ein Halsteil an, das mit einer Öffnung versehen ist. Das Halsteil kann durch einen Transferring vom Preformkörper getrennt sein. Der Preform kann aus einem Kunststoff gefertigt werden, der eine Kunststoff-Hauptkomponente aus der Gruppe bestehend aus Polyethylenterephthalat, Polyethylennaphthalat, Polyethylenfuranoat, Polylactid, deren Copolymere und Gemischen der genannten Kunststoffe umfasst. Die angeführten Kunststoffe weisen grosse Ähnlichkeiten hinsichtlich ihrer Verarbeitbarkeit auf. Sie erlauben hohe Verstreckungsgrade und können zu transparenten Kunststoffbehältern mit hohen Festigkeitswerden verarbeitet werden. Der Preform kann ein oder mehrschichtig aufgebaut sein. Je nach den Anforderungen an den Kunststoffbehälter kann dieser ein- oder mehrschichtig ausgebildet sein. Dabei erweist es sich für die Festigkeitseigenschaften des Kunststoffbehälters von Vorteil, wenn wenigstens eine Schicht aus einem Kunststoff bzw. aus einem Kunststoffgemisch der Gruppe bestehend aus Polyestern Polyolefinen, Polyamiden, Polystyrolen Polylactiden und Polyamiden, insbesondere PET, PE, PP, PEN, PVC, PVDC, PLA, besteht. Für die Herstellung des Preforms in einem Kunststoffspritzverfahren oder in einem Fliesspressverfahren und für die nachfolgende Ausformung des Kunststoffbehälter aus dem Preform in einem nachfolgenden Streckblasverfahren kann es von Vorteil sein, wenn wenigstens eine Schicht aus mono-, bi- oder polymodalem HDPE oder Polypropylen besteht. Für viele Anwendungen des Kunststoffbehälters, insbesondere für den Einsatz im Lebensmittelbereich, kann es sich als vorteilhaft erweisen, wenn er mehrschichtig ausgebildet ist und wenigstens eine Schicht mit Barriereadditiven, insbesondere Sauerstofffängern, Nanoclays oder UV-Blockern und/oder eine Gleitbeschichtung und/oder eine Restentleerungsbeschichtung aufweist. Aus ökologischen Gründen kann der erfindungsgemässe Kunststoffbehälter aus bis zu 100% rezykliertem Kunststoffmaterial (PCR Kunststoffen = Post Consumer Regrind Kunststoffen) bestehen. Das Streckblasverfahren kann unmittelbar im Anschluss an die Herstellung des Preforms durchgeführt werden. Die Herstellung des Preforms kann aber auch räumlich und/oder zeitlich getrennt vom Streckblasverfahren erfolgen.

Der Kunststoff-Hauptkomponente können bis zu 20 Gewichtsprozent Fremdstoffe beigemischt werden. Durch die Beimischung von Fremdstoffen können die Eigenschaften des Preforms an die gewünschten Erfordernisse angepasst werden. Beispielsweise können als Fremdstoffe Copolymere, Farbstoffe, UV-Blocker, Stabilisierungszusätze wie z.B. Glasfasern oder Glaskugeln oder Mischungen daraus, Additive oder Fremdpolymere gewählt werden. Darüber hinaus kann der Preform neben der Kunststoff-Hauptkomponente auch noch weitere Kunststoffe aus der Gruppe bestehend aus PEN, PEF, PLA, Polyester, Polyamid, Polybutylenterephthalat, Polycarbonat, Polyolefine, Silicone, deren Copolymere und Mischungen der genannten Kunststoffe umfassen.

Der im Kunststoffspritzverfahren oder im Fliesspressverfahren hergestellte Preform wird in ein Blasformwerkzeug einer Streckblasvorrichtung eingesetzt und dort durch ein mit Überdruck eingeblasenen Blasmedium, üblicherweise Luft, gemäss einer vom Blasformwerkzeug umschlossenen Formkavität aufgeblasen und gleichzeitig mit einem Reckdorn gereckt bzw. verstreckt. In alternativen "Streckblasverfahren" kann das eingebrachte Fluid auch flüssig sein. Bei dem speziellen Lost-Neck (verlorener Hals) Verfahren wird ein unterhalb des Transferrings befindlicher Bereich 11 des Preforms domartig erweitert aufgeblasen. Dabei wird auch ein Abschnitt 2 des Kunststoffbehälters 1, der am fertigen Kunststoffbehälter 1 einen Behälterhals bildet, biaxial verstreckt und ausgeformt. An diesem, an den mit dem Halsteil des Preforms verbundenen domartig erweiterten Bereich 11 anschliessenden Abschnitt 2 des Kunststoffbehälters 1 können eine oder mehrere gegenüber einer Behälterwandung 3 vor- oder rückspringenden Strukturen ausgebildet sein. Im dargestellten Ausführungsbeispiel des Kunststoffbehälters 1 sind diese Strukturen beispielsweise als Gewindeabschnitte 5 eines Aussengewindes ausgebildet. Unterhalb des den Behälterhals bildenden Abschnitts 2 des Kunststoffbehälters 1 schliesst ein Behälterkörper 4 an.

Fig. 2 zeigt den streckgeblasenen Kunststoffbehälter 1, nachdem der domartig aufgeblasene Bereich 11, an dem noch der beim Streckblasverfahren unveränderte Halsteil des Preforms ersichtlich ist, abgetrennt worden ist. Durch das Abtrennen des domartig aufgeblasenen Bereichs 11 erhält der streckgeblasene Kunststoffbehälter 1 eine Halsöffnung, deren Durchmesser deutlich grösser ist als derjenige der Öffnung des Preforms. Der Durchmesser der Öffnung des geschnittenen Halsabschnitts kann grösser sein als 48 mm und kann bis zu 150 mm betragen. Die am geschnittenen Halsabschnitt 2 des Kunststoffbehälters 1 im Streckblasverfahren ausgeformten Gewindeabschnitte sind wiederum mit dem Bezugszeichen 5 versehen. Der beispielsweise zylindrische Körper des streckgeblasenen Kunststoffbehälters 1 trägt das Bezugszeichen 4.

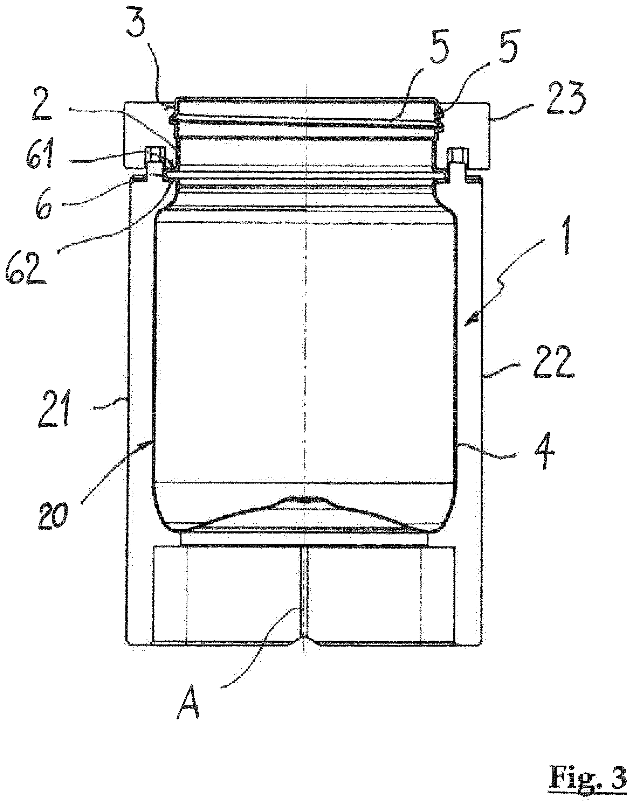

Fig. 3 zeigt schematisch einen in einer Formkavität 20 eines Blasformwerkzeugs 21 befindlichen Kunststoffbehälter, der wiederum mit dem Bezugszeichen 1 versehen ist. Aus Gründen der besseren Übersicht wurde auf die Darstellung des domartig aufgeblasenen Abschnitts verzichtet. Der den Hals des streckgeblasenen Kunststoffbehälters 1 bildende Behälterabschnitt 2 ist mit Strukturen ausgebildet, die beispielsweise gegenüber der Behälterwandung 3 radial vorspringen. Dabei handelt es sich einerseits um Gewindeabschnitte 5 eines Aussengewindes sowie um einen Supportring 6, der zwischen der zwischen den Gewindeabschnitten 5 und dem Körper 4 des Kunststoffbehälters 1 angeordnet ist. Das Blasformwerkzeug 21 weist einen gegenüber einem Formgrundkörper 22 in axiale Richtung A zustellbaren Stauchring 23 auf. Der Supportring 6 ist zwischen dem Formgrundkörper 22 und dem gegenüber dem Formgrundkörper 22 axial verstellbaren Stauchring 23 eingeklemmt. Entsprechend dem in Fig. 3 angedeuteten Aufbau des Blasformwerkzeugs 21 aus zwei Hälften des Formgrundkörpers 22 kann auch der Stauchring 23 aus zwei Stauchringhälften bestehen.

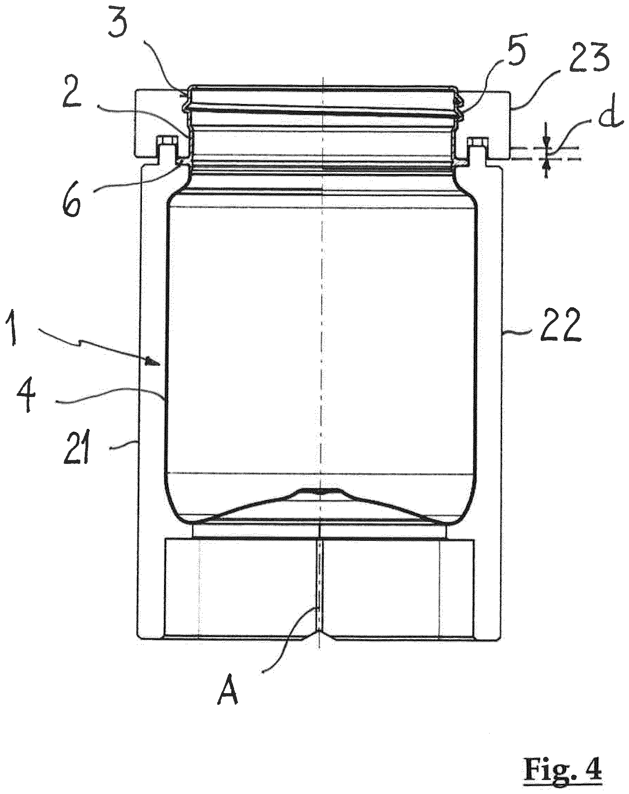

Während Fig. 3 den in der Formkavität des Blasformwerkzeugs 21 streckgeblasenen Kunststoffbehälter 1mit einem in seiner Ausgangslage befindlichen Stauchring 23 zeigt, befindet sich der Stauchring 23 in der schematischen Darstellung von Fig. 4 in seiner Endlage. Aus Gründen der besseren Übersicht wurde wiederum auf die Darstellung des domartig aufgeblasenen Abschnitts verzichtet. Der Stauchring 23 wurde um einen axialen Abstand d von 1 mm bis 22 mm auf den Formgrundkörper 22 zu bewegt. Durch die axiale Verstellung des Stauchrings 23 in Richtung des Formgrundkörpers 22 wird der ausgeblasene Supportring 6, der zwischen dem Stauchring 23 und dem Formgrundkörper 22 angeordnet ist, gestaucht. Dabei werden den Supportring axial begrenzende obere und untere Wandungsteile 61, 62 zusammengepresst.

Je nach der Temperatur des Kunststoffmaterials im Bereich des Supportrings 6 kommt es dabei zu unterschiedlichen Resultaten. Ist die Temperatur T grösser als eine Schmelztemperatur T_{S} des Kunststoffmaterials kommt es zu einer stoffschlüssigen Verbindung bzw. zu einem Verschweissen der Wandungsteile 61, 62. Dadurch kann der Supportring relativ scharfkantig ausgebildet werden. Als scharfkantig im Sinne der Erfindung wird dabei ein Krümmungsradius des freien Endes des Supportrings 6 angesehen, der bis zu 1,2 mm, vorzugsweise bis zu 0,5 mm, beträgt. Der Supportring 6 mit miteinander verschweissten Wandungsteilen 61, 62 weist eine hohe Formstabilität auf, ist relativ steif und kann relativ hohe axiale und radiale Zug- und Druckkräfte aufnehmen. Alternativ können die Wandungsteile auch durch Ultraschallschweissen oder durch Laserschweissen miteinander verbunden werden.

Ist die Temperatur T des Kunststoffmaterials im Bereich des Supportrings 6 grösser als eine Geliertemperatur T_{G} aber kleiner als die Schmelztemperatur T_{S} des Kunststoffmaterials, so kommt es zu einer Verklebung der axialen Begrenzungswandungsteile 61, 62 des Supportrings 6. Diese Verklebung ist bei Aufbringen einer Mindestzugkraft in der Grössenordnung von ca. 2 N pro verklebter Länge wieder lösbar. Eine derart hergestellter Supportring 6 ist scharfkantig, d.h. er kann an seinem freien Ende einen Krümmungsradius von bis zu 1,2 mm, vorzugsweise bis zu 0,5 mm, aufweisen. Dadurch kann der Supportring 6 relativ hohe radiale Kräfte aufnehmen, wie sie beispielsweise beim Aufeinanderprallen der Kunststoffbehälter 1 auf einer Abfüllanlage auftreten können. Auch weist der Kunststoffbehälter 1 eine relativ grosse Griffsteifigkeit gegenüber radialen Kräften, die der Konsument beim Handhaben des Kunststoffbehälters 1 ausüben kann, auf. Der Supportring 6 mit verklebten Wandungsteilen 61, 62 ist jedoch nur bedingt formstabil, weil die Verklebung unter Zug wieder gelöst werden kann. Dadurch verändert sich der Krümmungsradius der Struktur, was von aussen unmittelbar ersichtlich ist. Dies kann beispielsweise dazu genützt werden, den Verderb eines abgefüllten Produkts anzuzeigen. Beispielsweise kann sich innerhalb des Behälters durch Gärprozesse ein Überdruck aufbauen, der zu einem Lösen der verklebten Wandungsteile der Struktur führen kann. Alternativ oder in Ergänzung zum Supportring 6 kann beispielsweise auch eine Struktur vorgesehen sein, die als eine Erstöffnungsanzeige dienen kann, bei der die miteinander verklebten Wandungsteile durch eine Kraftaufbringung beim Öffnen des Behälterverschlusses voneinander gelöst werden. Die gelöste Verklebung der Struktur kann dann eine Scharnierfunktion erfüllen und erlaubt es dem Kunststoffbehälter 1, sich an Volumensänderungen des Füllguts, beispielsweise durch Temperaturunterschiede, anzupassen.

Ist die Temperatur T des Kunststoffmaterials im Bereich des Supportrings 6 kleiner als eine Geliertemperatur T_{G} des Kunststoffmaterials, kommt es beim axialen Stauchen nur zu einer sehr leicht lösbaren Verbindung der zusammengepressten Wandungsteile 61, 62 kommen. Die Verbindung ist so lose, das sie bereits durch einen sehr geringen Kraftaufwand von beispielsweise nur gerade 0,9 N pro mm zusammengepresster Länge lösbar ist. Der gestauchte Supportring weist dann eine Scharnierfunktion auf und erlaubt es dem Kunststoffbehälter, sehr leicht Volumensänderungen des Füllguts infolge von Temperaturunterschieden (Abkühlen nach Heissabfüllen oder Pasteurisieren; Lagerung des Behälters im Kühlschrank oder Tiefkühler) zu folgen.

Das axiale Stauchen von gegenüber der Behälterwandung 3 radial vorspringenden oder zurückspringenden Strukturen wurde unter Bezugnahme auf die Abbildungen Fig. 3 und Fig. 4 anhand eines Supportrings 6 erläutert, der die Behälterwandung 3 ringförmig umgibt und wenigstens bereichsweise radial überragt. Es versteht sich, dass auch die Gewindeabschnitte 5 axial gestaucht werden können. Zu diesem Zweck kann das Blasformwerkzeug 21 beispielsweise eine konzentrische Anordnung von Stauchringteilen aufweisen, die axial auf einander zu bewegt werden können. Die Gewindeabschnitte 5 können zwischen den konzentrischen Stauchringteilen geklemmt sein. Die Gewindeabschnitte 5 können in einer alternativen Verfahrensführung auch über eine Blasdüse gestaucht werden, die in die Öffnung des Kunststoffbehälters eingefahren wird. Für den Stauchvorgang setzt dann ein radial abragender Flansch der Blasdüse auf dem Öffnungsrand des Kunststoffbehälters auf. Diese Verfahrensführung kann zugleich dazu eingesetzt werden, den domartigen Bereich vom Kunststoffbehälter abzutrennen. Bei dem in Fig. 3 und Fig. 4 dargestellten Ausführungsbeispiel können dann mittels die auf den Öffnungsrand aufsetzende Blasdüse die Gewindeabschnitte 5 gestaucht werden, wobei zugleich der domartige Bereich abgetrennt werden kann. In weiterer Folge kann die Blasdüse auch auf die Oberseite des Stauchrings 23 drücken und diesen dadurch axial auf den Formgrundkörper 22 zu verlagern. Dadurch kann der Supportring 6 in gewünschtem Umfang gestaucht werden.

Das axiale Stauchen von gegenüber der Behälterwandung 3 radial vorspringenden oder zurückspringenden Strukturen 6 bzw. 5 ist nicht auf den an den domartigen Bereich anschliessenden Halsabschnitt 2 des Kunststoffbehälters 1 beschränkt. Bei geeigneter Ausstattung des Blasformwerkzeugs mit axial verstellbaren Stauchelementen können auch radial vorspringende bzw. zurückspringende in anderen Abschnitten des Kunststoffbehälters 1, beispielsweise im Behälterkörper 4, axial gestaucht werden.

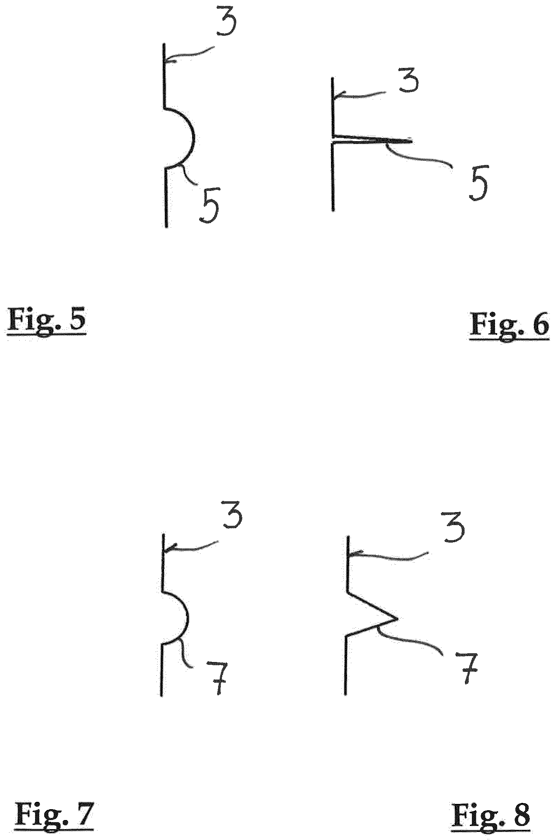

Die schematischen Darstellungen in Fig. 5 und Fig. 6 dienen zu Erläuterung einer permanenten Verringerung des Krümmungsradius einer gegenüber der Behälterwandung 3 vorradial vorspringenden (bzw. zurückspringenden) Struktur, beispielsweise von Gewindeabschnitten oder eines wenigstens bereichsweise umlaufenden Supportrings usw. Beispielsweise handelt es sich bei der dargestellten Struktur um einen Gewindeabschnitt 5. Fig. 5 zeigt den ausgeblasenen Gewindeabschnitt 5 nach dem Blasvorgang, bei dem das Kunststoffmaterial auch im Bereich der Gewindegänge 5 biaxial streckverfestigt worden ist. Der Krümmungsradius im Gewindegang 5 ist relativ gross. Dies erleichtert das Ausblasen der Struktur. Nach dem axialen Stauchvorgang weist der in Fig. 6 dargestellte Gewindegang 5 eine sehr scharfkantige Kontur auf. Als scharfkantig im Sinne der Erfindung wird dabei ein Krümmungsradius von bis zu 1,2 mm, vorzugsweise bis zu 0,5 mm, angesehen. Die axialen Begrenzungswandungsteile 61, 62 können miteinander verschweisst sein.

Die schematischen Darstellungen in Fig. 7 und Fig. 8 zeigen eine weitere gegenüber der Behälterwandung 3 vorspringende (bzw. zurückspringende) Struktur 7 vor und nach dem Stauchvorgang. Die Struktur 7, beispielsweise eine Dehnfuge, ist in Fig. 7 im ausgeblasenen Zustand vor dem Stauchvorgang dargestellt. Wiederum weist die Struktur 7 nach dem Blasvorgang einen relativ grossen Krümmungsradius auf. Fig. 8 zeigt die Struktur 7 nach dem Stauchvorgang und nach dem Lösen einer allfälligen Verklebung zwischen den axialen Begrenzungswandungsteilen 61, 62. Der Krümmungsradius der Struktur 7 ist verringert. Die Struktur 7 weist nun eine Scharnierfunktion auf, beispielsweise damit ein Behälterabschnitt Volumensänderungen des Füllguts folgen kann.

## Patentansprüche

1. Streckblasverfahren zur Herstellung eines Kunststoffbehälters, bei dem ein im wesentlichen röhrchenartig ausgebildeter Preform mit einem Halsteil in eine Formkavität eines Blasformwerkzeugs einer Streckblasmaschine eingesetzt mit einem Reckdom gereckt und mit Hilfe eines Fluids durch Überdruck gemäss der Formkavität aufgeblasen wird, wobei ein Dom, der an einen mit wenigstens einer gegenüber einer Behälterwandung vor- oder rückspringenden Struktur versehenen Behälterabschnitt anschliesst und den Halsteil des Preforms umfasst, abgetrennt wird, **dadurch gekennzeichnet, dass** wenigstens ein Abschnitt der Struktur innerhalb des Blasformwerkzeuges auf ein vorgebbares Mass axial gestaucht wird, bevor der Kunststoffbehälter entformt wird.

2. Streckblasverfahren nach Anspruch 1, **dadurch gekennzeichnet, dass** eine axiale Länge des die wenigstens eine Struktur aufweisenden Behälterabschnitts des Preforms beim axialen Stauchen wenigstens temporär um 1 mm bis 30 mm reduziert wird.

3. Streckblasverfahren nach Anspruch 1 oder 2, **dadurch gekennzeichnet, dass** ein Bereich des Behälterabschnitts des Kunststoffbehälters, der wenigstens eine Struktur, vorzugsweise Gewindeabschnitte, aufweist, für den Stauchprozess auf eine Temperatur erwärmt wird, die grösser ist als eine Schmelztemperatur des Kunststoffs, aus dem der Kunststoffbehälter hergestellt ist.

4. Streckblasverfahren nach einem der vorangehenden Ansprüche, **dadurch gekennzeichnet, dass** ein Bereich des Behälterabschnitts des Kunststoffbehälters, der wenigstens eine, vorzugsweise wenigstens bereichsweise ringförmig umlaufende, Struktur aufweist, für den Stauchprozess auf eine Temperatur erwärmt wird, die grösser ist als eine Geliertemperatur und kleiner ist als eine Schmelztemperatur des Kunststoffs aus dem der Kunststoffbehälter hergestellt ist.

5. Streckblasverfahren nach einem der Ansprüche 1 bis 3, **dadurch gekennzeichnet, dass** ein Bereich des Behälterabschnitts des Kunststoffbehälters, der wenigstens eine, vorzugsweise wenigstens bereichsweise ringförmig umlaufende, Struktur aufweist, für den Stauchprozess auf eine Temperatur erwärmt wird, die kleiner ist als eine Geliertemperatur des Kunststoffs aus dem der Preform hergestellt ist.

6. Streckblasverfahren nach einem der vorangehenden Ansprüche, **dadurch gekennzeichnet, dass** das Stauchen des Behälterabschnitts mit Hilfe eines Stauchrings erfolgt, der einen Bestandteil des Blasformwerkzeugs bildet.

7. Streckblasverfahren nach einem der Ansprüche 1 bis 5, **dadurch gekennzeichnet, dass** das Stauchen des Behälterabschnitts mit Hilfe einer Blasdüse erfolgt, die in eine Öffnung im Halsteil des in der Formkavität angeordneten Preforms eingefahren wird.

8. Streckblasverfahren nach einem der vorangehenden Ansprüche, **dadurch gekennzeichnet, dass** der den Halsteil des Preforms umfassende Dom beim axialen Stauchen abgetrennt wird.

9. Streckblasverfahren nach einem der vorangehenden Ansprüche, **dadurch gekennzeichnet, dass** die am Kunststoffbehälter infolge der Abtrennung des Doms gebildete Schnittkante sowie die sich daran anschließende Wandung thermisch und/oder mechanisch behandelt wird, um diese zu glätten.

10. Streckblasverfahren nach einem der vorangehenden Ansprüche, **dadurch gekennzeichnet, dass** das Abtrennen des Doms vom Kunststoffbehälter im Bereich einer vorspringenden Struktur erfolgt.

11. Streckblasverfahren nach Anspruch 10, **dadurch gekennzeichnet, dass** das Abtrennen des Doms derart erfolgt, dass die vorspringende Struktur von einer oberen Wandung, welche die Schnittkante umfasst, und von einer unteren Wandung begrenzt wird, wobei die obere und die untere Wandung vorzugsweise durch Ultraschallschweißen oder durch Laserschweißen miteinander verbunden werden.

12. Streckblasverfahren nach einem der vorangehenden Ansprüche, **dadurch gekennzeichnet, dass** sich die Schneidrichtung beim Abtrennen des Doms im Wesentlichen quer zur Längsachse des Kunststoffbehälters oder im Wesentlichen längs zur Längsachse des Kunststoffbehälters erstreckt.

13. Streckblasverfahren nach einem der vorangehenden Ansprüche, **dadurch gekennzeichnet, dass** es an einem Preform durchgeführt wird, der aus einem Kunststoff gefertigt wird, der eine Kunststoff-Hauptkomponente aus der Gruppe bestehend aus Polyethylenterephthalat, Polyethylennaphthalat, Polyethylenfuranoat, Polylactid, deren Copolymere und Gemischen der genannten Kunststoffe umfasst.

14. Streckblasverfahren nach Anspruch 13, **dadurch gekennzeichnet, dass** der Kunststoff-Hauptkomponente bis zu 20 Gewichtsprozent Fremdstoffe beigemischt werden.

15. Streckblasverfahren nach Anspruch 14, **dadurch gekennzeichnet, dass** als Fremdstoffe Copolymere, Farbstoffe, UV-Blocker, Stabilisierungszusätze wie z.B. Glasfasern oder Glaskugeln oder Mischungen daraus, Additive oder Fremdpolymere gewählt werden.

16. Streckblasverfahren nach einem der Ansprüche 13 bis 15, **dadurch gekennzeichnet, dass** es an einem Preform durchgeführt wird, der aus einem Kunststoff gefertigt wird, der neben der Kunststoff-Hauptkomponente noch weitere Kunststoffe aus der Gruppe bestehend aus PEN, PEF, PLA, Polyester, Polyamid, Polybutylenterephthalat, Polycarbonat, Polyolefine, Silicone, deren Copolymere und Mischungen der genannten Kunststoffe umfasst.

17. Kunststoffbehälter gefertigt in einem Streckblasverfahren gemäss einem der vorangehenden Ansprüche, **dadurch gekennzeichnet, dass** der wenigstens eine Behälterabschnitt eine Behälteröffnung und einem geschnittenen Öffnungsrand aufweist, wobei der Behälterabschnitt in seiner Aussenwandung mit Gewindestrukturen ausgebildet ist, die durch die axiale Stauchung der vor- oder rückspringenden Struktur einen Krümmungsradius von bis zu 1,2 mm, vorzugsweise von bis zu 0,5 mm, aufweisen.

18. Kunststoffbehälter nach Anspruch 17, **dadurch gekennzeichnet, dass** die Gewindestrukturen die Aussenwandung des Behälterabschnitts überragen.

19. Kunststoffbehälter gefertigt in einem Streckblasverfahren gemäss einem der Ansprüche 1 bis 16, **dadurch gekennzeichnet, dass** die vor- oder rückspringende Struktur des einen Behälterabschnitts als wenigstens eine zumindest bereichsweise ringförmig umlaufende Struktur ausgebildet ist, die gegenüber einer Aussenwandung des Behälterabschnitts um einen radialen Abstand von größer als 0,5 mm vorspringt, wobei diese vorspringende Struktur als ein Supportring ausgebildet ist und an ihrem freien Ende durch die axiale Stauchung einen Krümmungsradius aufweist, der bis zu 1,2 mm, vorzugsweise bis zu 0,5 mm beträgt.

20. Kunststoffbehälter nach Anspruch 19, **dadurch gekennzeichnet, dass** die wenigstens eine vorspringende Struktur von einer oberen und einer unteren Wandung begrenzt ist, die lösbar miteinander verbunden sind.

21. Kunststoffbehälter nach Anspruch 20, **dadurch gekennzeichnet, dass** die Verbindung der oberen und der unteren Wandung der vorspringenden Struktur durch eine Zugkraft einer Grösse von wenigstens 0,9N pro mm verbundener Länge lösbar ist.

## Claims

1. A stretch blow moulding method for manufacturing a plastic container, concerning which a preform which is designed in an essentially tubelet-like manner with a neck part is inserted into a mould cavity of a blow moulding tool of a stretch blow moulding machine, is stretched with a stretching mandrel and is inflated in accordance with the mould cavity by way of overpressure with the help of a fluid, wherein a dome which connects onto a container section which is provided with at least one structure which projects or recedes with respect to the container wall, and which comprises the neck part of the preform is separated away, **characterised in that** at least one section of the structure is axially compressed to a settable extent within the blow moulding tool before the plastic container is removed from the mould.

2. A stretch blow moulding method according to claim 1, **characterised in that** an axial length of the container section of the preform which comprises the at least one structure is at least temporarily reduced by 1 mm to 30 mm on axially compressing.

3. A stretch blow moulding method according to claim 1 or 2, **characterised in that** a region of the container section of the plastic container which comprises at least one structure, preferably threaded sections, for the compressing process is heated to a temperature which is greater than a melting temperature of the plastic from which the plastic container is manufactured.

4. A stretch blow moulding method according to one of the preceding claims, **characterised in that** a region of the container section of the plastic container which comprises at least one, preferably at least regionally annularly peripheral structure, for the compressing process is heated to a temperature which is greater than the gelation temperature and smaller than a melting temperature of the plastic from which the plastic container is manufactured.

5. A stretch blow moulding method according to one of the claims 1 to 3, **characterised in that** a region of the container section of the plastic container, said region comprising at least one preferably at least regionally annularly peripheral structure, for the compression process is heated to a temperature which is lower than a gelation temperature of the plastic from which the preform is manufactured.

6. A stretch blow moulding method according to one of the preceding claims, **characterised in that** the compressing of the container section is effected with the help of a compression ring which forms a constituent of the blow moulding tool.

7. A stretch blow moulding method according to one of the claims 1 to 5, **characterised in that** the compressing of the container section is effected with the help of a blow nozzle which is moved into an opening in the neck part of the preform arranged in the mould cavity.

8. A stretch blow moulding method according to one of the preceding claims, **characterised in that** the dome which comprises the neck part of the preform is separated away with the axial compressing.

9. A stretch blow moulding method according to one of the preceding claims, **characterised in that** the cut edge which is formed on the plastic container as a result of the separation of the dome, as well as the wall connecting thereto is thermally and/or mechanically treated, in order to smooth these.

10. A stretch blow moulding method according to one of the preceding claims, **characterised in that** the separating-away of the dome from the plastic container is effected in the region of a projecting structure.

11. A stretch blow moulding method according to claim 10, **characterised in that** the separating-away of the dome is effected in a manner such that the projecting structure is delimited by an upper wall which comprises the cut edge, and by a lower wall, wherein the upper and the lower wall are connected to one another, preferably by way of ultrasonic welding or by way of laser welding.

12. A stretch blow moulding method according to one of the preceding claims, **characterised in that** on separating away the dome, the cutting direction extends essentially transversely to the longitudinal axis of the plastic container or essentially along the longitudinal axis of the plastic container.

13. A stretch blow moulding method according to one of the preceding claims, **characterised in that** it is carried out on a preform which is manufactured from a plastic which comprises a plastic primary component from the group consisting of polyethylene terephthalate, polyethylene naphthalate, polyethylene furanoate, polylactide, their copolymers and mixtures of the mentioned plastics.

14. A stretch blow moulding method according to claim 13, **characterised in that** up to 20 percent by weight of foreign substances are admixed to the plastic primary component.

15. A stretch blow moulding method according to claim 14, **characterised in that** copolymers, dyes, UV blockers, stabilisation additives such as e.g. glass fibres or glass balls or mixtures thereof, additives or foreign polymers are selected as foreign substances.

16. A stretch blow moulding method according to one of the claims 13 to 15, **characterised in that** it is carried out on a preform which is manufactured from a plastic which apart from the plastic primary component yet comprises further plastics from the group consisting of PEN, PEF, PLA, polyester, polyamide, polybutylene terephthalate, polycarbonate, polyolefins, silicones, their copolymers and mixtures of the mentioned plastics.

17. A plastic container which is manufactured in a stretch blow moulding method according to one of the preceding claims, **characterised in that** the at least one container section comprises a container opening and a cut opening edge, wherein said container section in its outer wall being designed with thread structures which have, through the axial compression of the a at least one structure which projects or recedes with respect to the container wall, a radius of curvature of 1.2 mm, preferably up to 0.5 mm.

18. A plastic container according to claim 17, **characterised in that** the thread structures project beyond the outer wall of the container section.

19. A plastic container manufactured in a stretch blow moulding method according to one of the claims 1 to 16, **characterised in that** the structure of the container section which projects or recedes is formed as one at least regionally annularly peripheral structure which projects with respect to an outer wall of the container section by a radial distance of larger than 0.5 mm. wherein the projecting structure is designed as a support ring which at its free end has through the axial compression a radius of curvature which is up to 1.2 mm, preferably up to 0.5 mm.

20. A plastic container according to claim 19, **characterised in that** the at least one projecting structure can be delimited by an upper and a lower wall which are releasably connected to one another.

21. A plastic container according to claim 20, **characterised in that** the connection of the upper and of the lower wall of the projecting structure is releasable by a tensile force of a magnitude of at least 0.9 N per mm length.

## Revendications

1. Procédé d'étirage-soufflage destiné à la fabrication d'un récipient en matière synthétique, selon lequel une préforme réalisée sensiblement sous forme de petit tube et comportant une partie formant col est mise en place dans une cavité de moule d'un outil de moulage par soufflage d'une machine d'étirage-soufflage, est étirée avec un mandrin d'étirage et soufflée en fonction de la cavité de moule, à l'aide d'un fluide, par surpression, où un dôme est séparé, qui se raccorde à une partie de récipient pourvue d'au moins une structure en saillie ou en retrait par rapport à une paroi de récipient et qui comporte la partie formant col de la préforme, **caractérisé en ce qu'**au moins une portion de la structure est refoulée axialement à l'intérieur de l'outil de moulage par soufflage, jusqu'à une dimension pouvant être prédéterminée, avant de démouler le récipient en matière synthétique.

2. Procédé d'étirage-soufflage selon la revendication 1, **caractérisé en ce qu'**une longueur axiale de la partie de récipient présentant la structure, au nombre d'au moins une, de la préforme est réduite au moins temporairement de 1 mm à 30 mm lors du refoulement axial.

3. Procédé d'étirage-soufflage selon la revendication 1 ou 2, **caractérisé en ce qu'**une zone de la partie du récipient en matière synthétique, qui présente au moins une structure, de préférence des portions filetées, est chauffée, en vue du processus de refoulement, jusqu'à une température qui est supérieure à une température de fusion de la matière synthétique à partir de laquelle est réalisé le récipient en matière synthétique.

4. Procédé d'étirage-soufflage selon l'une des revendications précédentes, **caractérisé en ce qu'**une zone de la partie du récipient en matière synthétique qui présente au moins une structure, s'étendant de préférence au moins par portions sous une forme annulaire sur le pourtour, est chauffée, en vue du processus de refoulement, jusqu'à une température qui est supérieure à une température de gélification et inférieure à une température de fusion de la matière synthétique à partir de laquelle est réalisé récipient en matière synthétique.

5. Procédé d'étirage-soufflage selon l'une des revendications 1 à 3, **caractérisé en ce qu'**une zone de la partie du récipient en matière synthétique qui présente au moins une structure, s'étendant de préférence au moins par portions sous une forme annulaire sur le pourtour, est chauffée, en vue du processus de refoulement, jusqu'à une température qui est inférieure à une température de gélification de la matière synthétique à partir de laquelle est réalisée la préforme.

6. Procédé d'étirage-soufflage selon l'une des revendications précédentes, **caractérisé en ce que** le refoulement de la partie de récipient s'effectue à l'aide d'une bague de refoulement qui fait partie intégrante de l'outil de moulage par soufflage.

7. Procédé d'étirage-soufflage selon l'une des revendications 1 à 5, **caractérisé en ce que** le refoulement de la partie de récipient s'effectue à l'aide d'une buse de soufflage qui est engagée dans une ouverture dans la partie formant col de la préforme mise en place dans la cavité de moule.

8. Procédé d'étirage-soufflage selon l'une des revendications précédentes, **caractérisé en ce que** le dôme comportant la partie formant col de la préforme est séparé lors du refoulement axial.

9. Procédé d'étirage-soufflage selon l'une des revendications précédentes, **caractérisé en ce que** l'arête de coupe qui est formée sur le récipient en matière synthétique suite à la séparation du mandrin, ainsi que la paroi qui s'y raccorde, sont soumises à un traitement thermique et/ou mécanique, afin de les lisser.

10. Procédé d'étirage-soufflage selon l'une des revendications précédentes, **caractérisé en ce que** la séparation du dôme du récipient en matière synthétique est réalisée dans la région d'une structure en saillie.

11. Procédé d'étirage-soufflage selon la revendication 10, **caractérisé en ce que** la séparation du dôme est réalisée de manière telle que la structure en saillie soit délimitée par une paroi supérieure, comportant l'arête de coupe, et par une paroi inférieure, la paroi supérieure et la paroi inférieure étant reliées l'une à l'autre de préférence par soudage par ultrasons ou par soudage au laser.

12. Procédé d'étirage-soufflage selon l'une des revendications précédentes, **caractérisé en ce que** lors de la séparation du dôme, le dispositif de coupe s'étend sensiblement transversalement à l'axe longitudinal du récipient en matière synthétique, ou sensiblement le long de l'axe longitudinal du récipient en matière synthétique.

13. Procédé d'étirage-soufflage selon l'une des revendications précédentes, **caractérisé en ce qu'**il est mis en œuvre sur une préforme qui est réalisée à partir d'une matière synthétique qui comprend un composant principal de matière synthétique appartenant au groupe comprenant le poly(téréphtalate d'éthylène), le poly(naphtalate d'éthylène), le poly(furanoate d'éthylène), le polylactide, leurs copolymères et des mélanges des matières synthétiques citées.

14. Procédé d'étirage-soufflage selon la revendication 13, **caractérisé en ce que** l'on ajoute au composant principal de la matière synthétique jusqu'à 20 pour cent en poids de matières étrangères.

15. Procédé d'étirage-soufflage selon la revendication 14, **caractérisé en ce que** l'on choisit comme matières étrangères des copolymères, des colorants, des bloqueurs d'UV, des additifs de stabilisation tels que des fibres de verre ou des billes de verre, ou des mélanges de ceux-ci, des adjuvants ou des polymères étrangers.

16. Procédé d'étirage-soufflage selon l'une des revendications 13 à 15, **caractérisé en ce qu'**il est mis en œuvre sur une préforme qui est fabriquée à partir d'une matière synthétique qui comprend, outre le composant principal de matière synthétique, d'autres matières synthétiques du groupe comprenant PEN, PEF, PLA, polyester, polyamide, poly(téréphtalate de butylène), polycarbonate, polyoléfine, silicones, leurs copolymères et des mélanges des matières synthétiques citées.

17. Récipient en matière synthétique réalisé par un procédé d'étirage-soufflage selon l'une des revendications précédentes, **caractérisé en ce que** la partie de récipient, au nombre d'au moins une, présente une ouverture de récipient et un bord d'ouverture coupé, la partie de récipient étant réalisée avec des structures filetées dans sa paroi extérieure, qui, du fait du refoulement axial de la structure en saillie ou en retrait, présentent un rayon de courbure allant jusqu'à 1,2 mm, de préférence jusqu'à 0,5 mm.

18. Récipient en matière synthétique selon la revendication 17, **caractérisé en ce que** les structures filetées dépassent par rapport à la paroi extérieure de la partie de récipient.

19. Récipient en matière synthétique réalisé par un procédé d'étirage-soufflage selon l'une des revendications 1 à 16, **caractérisé en ce que** la structure en saillie ou en retrait de la partie de récipient, au nombre d'une, est réalisée sous la forme d'au moins une structure qui s'étend au moins par portions sous une forme annulaire sur le pourtour et fait saillie avec une distance radiale de plus de 0,5 mm par rapport à une paroi extérieure de la partie de récipient, cette structure en saillie étant réalisée sous la forme d'un anneau de support et présentant à son extrémité libre un rayon de courbure qui résulte du refoulement axial et vaut jusqu'à 1,2 mm, de préférence jusqu'à 0,5.

20. Récipient en matière synthétique selon la revendication 19, **caractérisé en ce que** la structure, au nombre d'au moins une, est délimitée par une paroi supérieure et une paroi inférieure qui sont reliées entre elles de façon amovible.

21. Récipient en matière synthétique selon la revendication 20, **caractérisé en ce que** la liaison de la paroi supérieure et de la paroi inférieure de la structure en saillie peut être défaite par une force de traction d'une grandeur d'au moins 0,9 N par mm de longueur reliée.
